# EUROPÄISCHE PATENTANMELDUNG

(11) **EP 3 106 946 A1**
(43) Veröffentlichungstag der Anmeldung: **21.12.2016**
(21) Anmeldenummer: 16001108.6
(22) Anmeldetag: 14.05.2016
(51) Int. Cl.: G05B 19/416, B25J 9/16

(54) **VERFAHREN ZUR STEUERUNG DES BEWEGUNGSABLAUFS EINER MOTORISCH ANGETRIEBENEN MASCHINEN- ODER WERKZEUGKOMPONENTE**

(30) Priorität: 17.06.2015 DE 102015109708
(71) Anmelder: Simon, Uwe, 74722 Buchen (DE)
(72) Erfinder: Simon, Uwe, 74722 Buchen (DE)
(74) Vertreter: Meyer-Roedern, Giso

(57) **Zusammenfassung**

Der Bewegungsablauf einer motorisch angetriebenen Maschinen- oder Werkzeugkomponente wird durch die funktionelle Abhängigkeit wenigstens einer räumlich-geometrischen Orts- oder Winkelfolgekoordinate von einer räumlich-geometrischen Orts- oder Winkelleitkoordinate bestimmt. Es wird eine Ausgangsfunktion festgelegt. Auf oder nahe der Ausgangsfunktion werden Stützpunkte definiert und benachbarte Stützpunkte durch im wesentlichen lineare Funktionsabschnitte miteinander verbunden. An den Stützpunkten wird ein stetiger, glatter Übergang zwischen den im wesentlichen linearen Funktionsabschnitten hergestellt. Aus den im wesentlichen linearen Funktionsabschnitten und den Übergangsabschnitten wird eine Folgefunktion zusammengesetzt. Es wird der Energiebedarf für den Bewegungsablauf nach der Ausgangsfunktion und nach der Folgefunktion ermittelt und verglichen und gebotenenfalls die zuletzt erhaltene (Folge-, Folge-Folge-, ...) Funktion zur Minderung des Energiebedarfs wie vor modifiziert.

## Beschreibung

Die Erfindung betrifft ein Verfahren zur Steuerung des Bewegungsablaufs einer motorisch angetriebenen Maschinen- oder Werkzeugkomponente.

Aus der DE 102 47 565 A1 sind ein Verfahren und eine Vorrichtung zur energetischen Optimierung von zyklisch ablaufenden Maschinenprozessen bekannt.

Bei der WO 2014/164 303 A1 werden Punkte auf der Bewegungsbahn eines Industrieroboters identifiziert, an denen sich eine Maschinen- oder Werkzeugkomponente zur Erfüllung einer Aufgabe befindet. Auf der Grundlage dieser Punkte werden verschiedene Bewegungsbahnen des Roboters generiert, und es wird die Bewegungsbahn mit dem geringsten Energiebedarf ausgewählt.

Die DE 11 2012 003 253 T5 beschreibt ein Verfahren zur Erzeugung von Bewegungsbahnen für motorisch angetriebene Betätigungsvorrichtungen. Speziell geht es um Positionierungsanwendungen, zum Beispiel eine einachsige oder mehrachsige Positionierung. Es wird das Problem einer energiesparenden optimalen Steuerung mit einem iterativen Ansatz behandelt.

Die DE 10 2011 102 297 A1 behandelt die Steuerung von Antriebsmotoren eines Roboters, die jeweils einer von mehreren Achsen des Roboters zugeordnet sind. Auf Bewegungsbahnen, die die Achsen durchlaufen, werden Stützpunkte angeordnet, und es wird ein Verlauf der Bewegungsbahn zwischen zwei benachbarten Stützpunkten durch einen sinus- oder splinekurvenartigen Verlauf einer optimierten Bewegungsbahn ersetzt. Die Bewegungsbahnen sind dynamisch modelliert. Es geht um die Änderung räumlich-geometrischer Achswinkelkoordinaten in der Zeit.

Die DE 10 2014 104 226 A1 behandelt ein Verfahren zur dynamischen Berechnung eines Bewegungspfades eines mehrachsigen Roboters mit dem Ziel, dessen Bewegungsgeschwindigkeit zu erhöhen.

Die DE 198 00 552 C2 betrifft eine Verfahren zur Kommandosteuerung eines Manipulators, bei dem ein iterativer Ansatz verfolgt und ein Energiekriterium berechnet wird.

Die EP 2 843 491 A1 beschreibt ein Positionierverfahren für einen elektrischen Antrieb, der ein spezielles Beschleunigungsprofil durchläuft.

Die DE 10 2010 052 253 A1 behandelt die Steuerung einer Roboteranordnung mit wenigstens zwei Robotern. Grundgedanke ist, eine Zeitdifferenz, die zwischen einer Zeit, die der langsamste Roboter zur Abarbeitung eines Prozessabschnitts benötigt, und der Zeit, die ein schnellerer Roboter bei zeitoptimalem Betrieb benötigen würde, zu nutzen, um den Arbeitsablauf des schnelleren Roboters zu optimieren, und zwar insbesondere in Hinblick auf seinen Energieverbrauch. Eine Bahnkurve eines Roboters kann über die Vorgabe seiner Gelenkwinkel über einem Bahnparameter beschrieben werden. Zur Optimierung der Bahnkurve können Stützpunkte oder andere Parameter, die die Bahnkurve allgemein beschreiben, etwa die Koeffizienten von Splines oder dergleichen, als variable Optimierungsparameter verwendet werden. Ein mögliches Gütekriterium der Optimierung ist eine Energiegröße des Roboters, beispielsweise dessen Energieverbrauch oder das Integral der Antriebsleistungen seiner Antriebe.

Für die energetische Optimierung der Bewegungsbahn eines Industrieroboters sind folgende Fachpublikationen einschlägig:
Paryanto, Matthias Brossog, Johannes Kohl, Jochen Merhof, Simon Spreng, Jörg Franke: "Energy consumption and dynamic behavior analysis of a six-axis industrial robot in an assembly system";
Procedia CIRP 23 (2014), Seiten 131 bis 136;
Davis Meike, Leonids Ribickis: "Industrial Robot Path Optimization Approach with Asynchronous FLY-BY in Joint Space"; © 2011 IEEE, 978-1-4244-9312-8/11, Seiten 911 bis 915;
Christian Hansen, Julian Öltjen, Davis Meike, Tobias Ortmaier: "Enhanced Approach for Energy-Efficient Trajectory Generation of Industrial Robots", 8th IEEE International Conference on Automation Science and Engineering; © 2012 IEEE, 978-1-4673-0430-6/12, Seiten 1 bis 7;
Marcello Pellicciari, Giovanni Berselli, Federico Balugani, Davis Meike, Francesco Leali: "On Designing Optimal Trajectories for Servo-Actuated Mechanismns Through Highly Detailed Virtual Prototypes"; 2013 IEEE/ASME International Conference on Advanced Intelligent Mechatronics (AIM); © 2013 IEEE, 978-1-4673-5320-3/13, Seiten 1780 bis 1785;
Abdullah Mohammed, Bernard Schmidt, Lihui Wang, Liang Gao: "Minimising Energy Consumption for Robot Arm Movement";
The 8th International Conference on Digital Enterprise Technology (DET2014); Stuttgart, 2014.

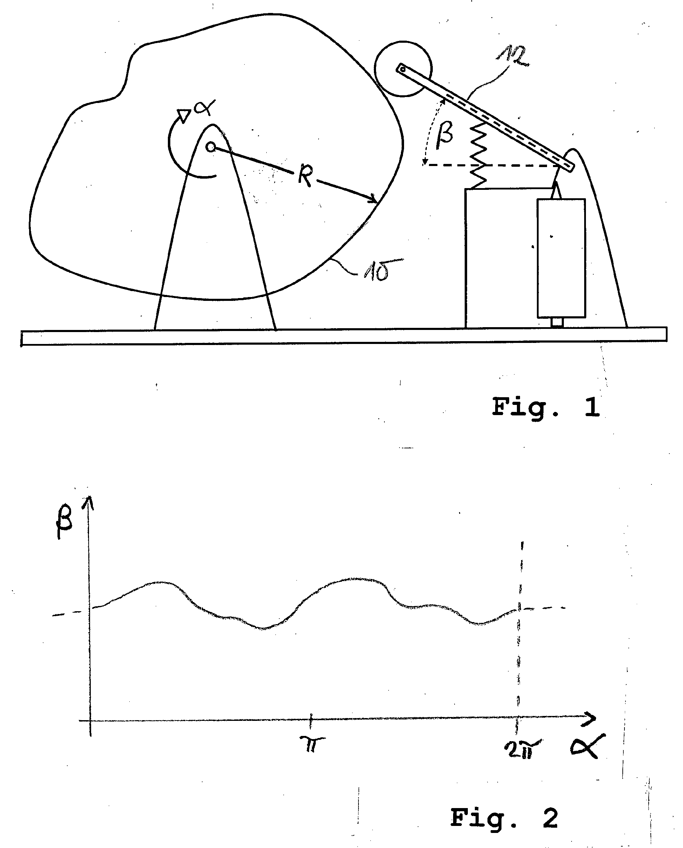

Die herkömmlichen Ansätze zu einer energetischen Optimierung basieren auf der dynamischen Modellierung des Bewegungsablaufs einer Maschinen- oder Werkzeugkomponente. Die modellierten Bewegungsbahnen betreffen die Änderung räumlich-geometrischer Größen, beispielsweise Orts- oder Winkelkoordinaten, in der Zeit. Die Erfindung operiert hingegen prinzipiell nicht mit Orts-Zeit-, sondern mit Orts-Orts-Funktionen:
Exemplarisch betrachte man in Fig. 1 ein Kurvengetriebe, bei dem eine rotierende Kurvenscheibe 10 mit einem Gelenkarm 12 abgegriffen wird. Die Randkontur R (α) der Kurvenscheibe in Abhängigkeit von deren Umfangswinkel α (0 ≤ α ≤ 2 π) bestimmt den Anstellwinkel β des Gelenkarms 12. Der Bewegungsablauf des Gelenkarms 12 wird durch die Funktion β (α) gemäß Fig. 2 wiedergegeben. Es ist dies eine periodische Winkel-Winkel-Funktion, in der der Umfangswinkel α der Kurvenscheibe 10 als räumlich-geometrische Leitkoordinate und der Anstellwinkel β des Gelenkarms 12 als räumlich-geometrische Folgekoordinate auftritt.

Die Winkel-Winkel-Funktion gemäß Fig. 2 beschreibt die Bewegung des Gelenkarms nicht vollständig. Um die Antriebsenergie für das Kurvengetriebe auch nur abschätzen zu können, bedarf es näherer Angaben über die zu bewegenden Massen, Kräfte und Momente, (Winkel-) Geschwindigkeiten, (Winkel-) Beschleunigungen u. a. m.

Zu den Erkenntnissen der vorliegenden Erfindung zählt, dass sich die Bewegungsabläufe motorisch angetriebener Maschinen- und Werkzeugkomponenten überraschend universell durch relativ einfache funktionelle Abhängigkeiten räumlich-geometrischer Koordinaten darstellen lassen. Ausgehend von einer räumlich-geometrischen Leitkoordinate der Bewegung, nämlich einer Orts- oder Winkelleitkoordinate, betrachtet man die funktionelle Abhängigkeit einer räumlich-geometrischen Folgekoordinate, nämlich einer Orts- oder Winkelfolgekoordinate, und ermittelt die Koordinate-Koordinate-Funktion (Orts-Orts-Funktion, Orts-Winkel-Funktion, Winkel-Orts-Funktion, Winkel-Winkel-Funktion) in weitgehender Abstrahierung von aller Kinematik, Massen, Geschwindigkeiten, Beschleunigungen, Kräften, Momenten u. a. Eine Leitkoordinate kann dabei nur eine, aber auch mehrere Folgekoordinaten bestimmen.

Eine Folgekoordinate kann ihrerseits Leitkoordinate für eine oder mehrere Folge-Folgekoordinaten sein. Auch die Bewegungsabläufe komplexer mehrachsiger Maschinen und Werkzeugmaschinen wie beispielsweise Industrieroboter, die Koordinatenfreiheitsgrade in Form mehrerer, unabhängig voneinander angetriebener Achsen haben, können durch Funktionen ihrer räumlich-geometrischen Koordinaten dargestellt werden, zumeist gar in Abhängigkeit von einer einzigen räumlich-geometrischen Leitkoordinate.

Die von der Kinematik abstrahierende Darstellung des Bewegungsablaufs durch eine oder mehrere Funktion(en) einer räumlich-geometrischen Koordinate in Abhängigkeit von einer anderen räumlich-geometrischen Koordinate wird erfindungsgemäß dazu genutzt, den Bewegungsablauf im Sinn einer Minimierung der erforderlichen Antriebsenergie zu optimieren. Dazu wird eine vorgefundene oder eingangs empirisch ermittelte Ausgangsfunktion schrittweise modifiziert, indem auf oder nahe der Ausgangsfunktion Stützpunkte definiert werden. Paarweise benachbarte Stützpunkte werden durch im wesentlichen lineare Funktionsabschnitte miteinander verbunden. An den Stützpunkten wird ein stetiger, glatter Übergang zwischen den im wesentlichen linearen Funktionsabschnitten hergestellt; dazu genügt es zumeist, ein kurzes Stück der beiden im wesentlichen linearen Funktionsabschnitte durch ein Polynom zu ersetzen. Aus den im wesentlichen linearen Funktionsabschnitten und den Übergangsabschnitten wird eine Folgefunktion zusammensetzt, die einem modifizierten Bewegungsablauf entspricht, für den es erfahrungsgemäß weniger Antriebsenergie bedarf, als für den Bewegungsablauf nach der Ausgangsfunktion. Das wird in geeigneter Weise verifiziert und, soweit geboten, die zuletzt erhaltene (Folge-, Folge-Folge-, ...) Funktion weiter wie vor modifiziert, indem auf oder nahe der Funktion neue Stützpunkte definiert, durch im wesentlichen lineare Funktionsabschnitte miteinander verbunden, der Übergang zwischen den im wesentlichen linearen Funktionsabschnitten geglättet und so der Antriebsenergiebedarf für den Bewegungsablauf nach der schließlich resultierenden Funktion sukzessive minimiert wird.

Nach vorgenommener Optimierung gemäß der Erfindung wirkt der Bewegungsablauf von Maschinen- und Werkzeugkomponenten flüssiger, geradlinig-direkter, langsamer als zuvor. Zumindest ein Teil der objektiv nachzuweisenden Energieersparnis möchte daher auf im Großen und Ganzen niedrigere Absolutgeschwindigkeiten zurückzuführen sein, wie sie sich bei der kinematischen Umsetzung der erfindungsgemäß optimierten Koordinaten-Koordinaten-Funktion(en) offenbar regelmäßig einstellen.

Auch wenn der Arbeitshub einer Maschinen- oder Werkzeugkomponente durch den Prozessablauf so strikt vorgegeben ist, dass kaum Spielraum für eine Bewegungsoptimierung unter dem Gesichtspunkt der Energieersparnis bleibt, empfiehlt sich bei zyklischen Arbeitsprozessen ein Augenmerk auf den eventuellen Leerhub oder Rückhub der Maschinen- oder Werkzeugkomponente. Hier läßt sich durch Optimierung des Bewegungsablaufs oft noch viel Energie sparen.

Achtet man an den Übergangsabschnitten der erfindungsgemäß optimierten Koordinaten-Koordinaten-Funktionen auf niedrige Maximalwerte der zweiten Ableitungen, so ergeben sich in der Regel bei der kinematischen Umsetzung niedrige Beschleunigungsspitzen, welche niedrige Kräfte und/oder Momente bedeuten. Infolgedessen kann das erfindungsgemäße Verfahren durch Minimierung der Maximalwerte der zweiten Ableitungen der Koordinaten-Koordinaten-Funktionen nicht nur zur energetischen Minimierung, sondern auch zur Minimierung der auftretenden Kräfte und/oder Momente eingesetzt werden.

Bei einer bevorzugten Ausführungsform wird mindestens ein im wesentlichen linearer Funktionsabschnitt einer räumlich-geometrischen Leitkoordinate-Folgekoordinate-Funktion auf eine möglichst große Länge und/oder auf eine möglichst geringe Steigung hin modifiziert. Bei der kinematischen Umsetzung der so optimierten Funktion sind im allgemeinen niedrigere Absolutgeschwindigkeiten zu verzeichnen.

Bei einer bevorzugten Ausführungsform wird mindestens ein im wesentlichen linearer Funktionsabschnitt von einer Geraden oder von einem Polynom gebildet, bei welchem die zweite und die dritte Ableitung und vorzugsweise überdies wenigstens eine höhere Ableitung eine gemeinsame Nullstelle im Definitionsbereich des im wesentlichen linearen Funktionsabschnitts haben.

Bei einer bevorzugten Ausführungsform wird mindestens ein Übergangsabschnitt einer räumlich-geometrischen Leitkoordinate-Folgekoordinate-Funktion von einem Polynom gebildet, das bis zur ersten Ableitung stetig und vorzugsweise auch in einer oder mehreren höheren Ableitung(en) glatt in die zu verbindenden, im wesentlichen linearen Funktionsabschnitte übergeht.

Bei einer bevorzugten Ausführungsform wird ein Ausgangspolynom, das einen Übergangsabschnitt bildet, modifiziert, indem es durch ein höhergradiges Polynom der genannten Art ersetzt wird, das an einem Hoch-/Tiefpunkt der zweiten Ableitung des Ausgangspolynoms in der dritten und vierten Ableitung eine Nullstelle hat. Bei der kinematischen Umsetzung der so optimierten Funktion sind im allgemeinen niedrigere Beschleunigungsspitzen zu verzeichnen.

Bei Anwendung speziell in der Robotik, wo es um die energetische Optimierung der Bewegungsabläufe komplexer mehrachsiger Maschinen und Werkzeugmaschinen wie beispielsweise Industrieroboter geht, wird vorzugsweise die Bahnlänge der Bewegungsbahn eines Werkzeugmittelpunkts (Tool Center Point; TCP) als Leitkoordinate verwendet. Diese Bahnlänge ist eine in der Robotik gebräuchliche Steuergröße für die Bahnbewegung eines Roboterarms mit einem geeigneten Werkzeug; anwendungsfallbezogen kann die Erfindung aber auch auf andere Bahnparameter zurückgreifen, die als Steuergröße für die Bahnbewegung des Roboterarms dienen. Die Orts- oder Winkelkoordinaten einer jeden Roboterachse werden als Folgekoordinaten einer Leitkoordinate (virtuellen Leitachse) beziehungsweise des Bahnparameters behandelt. Die Definition von Stützpunkten auf oder nahe einer Leitkoordinate-Folgekoordinate-Funktion kann durch die Transformation der Koordinaten von Bahnstützpunkten auf der Bewegungsbahn des Werkzeugmittelpunkts (TCP) erfolgen.

Das erfindungsgemäße Verfahren kann gezielt die Bewegungsbahn eines Werkzeugmittelpunkts (TCP) im Raum zur energetischen Optimierung steuern. In diesem Fall wird wenigstens eine Raum- oder Orientierungskoordinate der Bewegungsbahn des Werkzeugmittelpunkts als Orts- oder Winkelfolgekoordinate einer Leitkoordinate (virtuellen Leitachse) beziehungsweise des Bahnparameters verwendet. Die einzelnen Roboterachskoordinaten ergeben sich dann durch Transformation dieser Raum- und Orientierungsfolgekoordinaten.

Bei einer bevorzugten Ausführungsform werden im wesentlichen lineare Funktionsabschnitte wenigstens zweier räumlich-geometrischer Orts- oder Winkelfolgekoordinaten in Abhängigkeit von derselben räumlich-geometrischen Winkelleitkoordinate auf Gleichlauf hin modifiziert; insbesondere dahingehend, dass sich die Folgekoordinaten weitgehend dieselben Leitkoordinatenbereiche für ihre im wesentlichen linearen Funktionsabschnitte teilen. Der lineare Gleichlauf der Folgekoordinaten ist quasi synchron; er könnte als synchron bezeichnet werden, wäre nicht die Leitkoordinate eine räumlich-geometrische Orts- oder Winkelkoordinate statt der Zeit.

Die Erfindung wird im folgenden anhand von in der Zeichnung dargestellten Ausführungsbeispielen näher erläutert. Es zeigen:
- Fig. 1: die schematische Darstellung eines Kurvengetriebes mit einer Kurvenscheibe und einem diese abgreifenden Gelenkarm;
- Fig. 2: eine den Bewegungsablauf des Gelenkarms wiedergebende Winkel-Winkel-Funktion;
- Fig. 3: Bewegungsstadien einer Vorrichtung zum Befüllen einer Eistüte, bei der ein Eistütenhalter eine geradlinige translatorische Bewegung von links nach rechts in horizontaler x-Richtung und eine Düse eine zyklische Bewegung in horizontaler y-Richtung (y parallel zu x) und in vertikaler z-Richtung vollführt;
- Fig. 4: die (y(x), z(x)) Ausgangsbahn einer Ausgangsbewegung der Düse;
- Fig. 5: die y(x) Ausgangsfunktion der Ausgangsbewegung gemäß Fig. 4;
- Fig. 6: die z(x) Ausgangsfunktion der Ausgangsbewegung gemäß Fig. 4;
- Fig. 7: die (y(x), z(x)) Folgebahn der in einem Folgeschritt modifizierten Bewegung der Düse;
- Fig. 8: die y(x) Folgefunktion der modifizierten Düsenbewegung gemäß Fig. 7;
- Fig. 9: die erste Ableitung y'(x) der Folgefunktion gemäß Fig. 8;
- Fig. 10: die zweite Ableitung y''(x) der Folgefunktion gemäß Fig. 8;
- Fig. 11: die z(x) Folgefunktion der modifizierten Düsenbewegung gemäß Fig. 7;
- Fig. 12: die erste Ableitung z'(x) der Folgefunktion gemäß Fig. 11;
- Fig. 13: die zweite Ableitung z''(x) der Folgefunktion gemäß Fig. 11;
- Fig. 14: die zweite Ableitung y''(x) der y(x) Folgefunktion einer alternativ modifizierten Düsenbewegung;
- Fig. 15: die Ausgangsfunktion der Bewegung des Werkzeugmittelpunkts (Tool Center Point; TCP) eines Roboterarms in einem dreidimensionalen kartesischen Ortskoordinatensystem;
- Fig. 16: die Folgefunktion, und
- Fig. 17: die Folge-Folgefunktion einer modifizierten Bewegung des Werkzeugmittelpunkts (TCP);
- Fig. 18: die Roboterarm-Achswinkel zu der Bewegung nach der Ausgangsfunktion gemäß Fig. 15;
- Fig. 19: die Roboterarm-Achswinkel zu der Bewegung nach der Folgefunktion gemäß Fig. 16;
- Fig. 20: die Roboterarm-Achswinkel zu der Bewegung nach der Folge-Folgefunktion gemäß Fig. 17;
- Fig. 21: eine weiter modifizierte dreidimensionale Bewegungsfunktion des Werkzeugmittelpunkts (TCP); und
- Fig. 22: die Roboterarm-Achswinkel zu der Bewegungsfunktion gemäß Fig. 21.

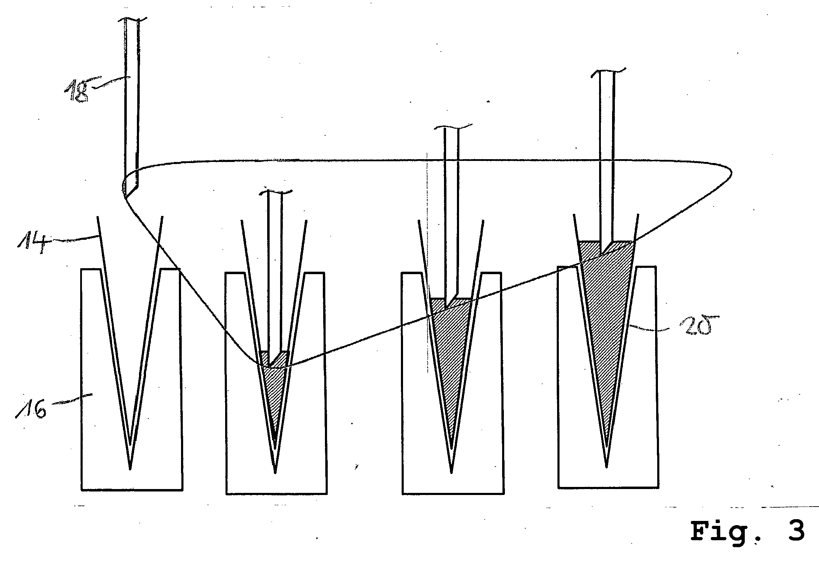

Fig. 3 zeigt schematisch eine Vorrichtung zum Befüllen einer Eistüte 14 in zeitlich aufeinanderfolgenden Bewegungsstadien.

In einem Eistütenhalter 16 steckt eine Eistüte 14, die mit einer Düse 18 befüllt wird. Gemäß Fig. 3 bewegt sich der Eistütenhalter 16 in der Horizontalen von links nach rechts. Die Richtung seiner geradlinigen translatorischen Bewegung wird im folgenden als x-Richtung bezeichnet.

Die Düse 18 fährt am Anfang der gezeigten Bewegungsstrecke des Eistütenhalters 16 (in Fig. 3 links) in die Eistüte 14 ein. Die Düse 18 vollführt dazu eine Stellbewegung in der Vertikalen (im folgenden als z-Richtung bezeichnet) von oben nach unten. Simultan folgt die Düse 18 der translatorischen Bewegung des Eistütenhalters 16 (in x-Richtung) in einer geradlinigen translatorischen Bewegung, deren Richtung im folgenden als y-Richtung bezeichnet wird.

Die x-Richtung und die y-Richtung sind parallel. Unterschiedlich bezeichnet sind sie nur in der Absicht, die funktionellen Abhängigkeiten y(x) und z(x) zu definieren und graphisch darzustellen. Die horizontale Ortskoordinate x des Eistütenhalters 16 ist die räumlich-geometrische Leitkoordinate. Die horizontale Ortskoordinate y der Düse 18 und die vertikale Ortskoordinate z der Düse 18 sind räumlich-geometrische Folgekoordinaten.

Die Befüllung der Eistüte 14 mit Speiseeismasse 20 setzt bei maximaler Eintauchtiefe der Düse 18 in die Eistüte 14 ein. Während der Befüllung fährt der Eistütenhalter 16 (in x-Richtung) weiter nach rechts und die Düse (in y-Richtung) synchron mit und (in z-Richtung) in der Eistüte 14 hoch. Nach Beendigung der Befüllung (in Fig. 3 rechts) fährt die Düse 18 nach oben aus der Eistüte 14 heraus und oberhalb davon in eine Ausgangsstellung (in Fig. 3 ganz links) über der nächsten Eistüte 14 zurück, um diese im Folgetakt zu befüllen. Der Eistütenhalter 16 mit der zuletzt befüllten Eistüte 14 setzt seine eindimensionale translatorische Bewegung fort. Die von der Bewegung des Eistütenhalters 16 abgeleitete Bewegung der Düse 18 ist zweidimensional und zyklisch.

In Fig. 3 ist die räumliche (y(x), z(x)) Bahn eingezeichnet, die die Düsenspitze beschreibt. Diese Bahn kann als energetisch günstig betrachtet werden, auch wenn ihr die volle Kinematik der Düsenbewegung nicht anzusehen ist. Es fehlen beispielsweise Daten zu der Dauer eines Zyklus, der Geschwindigkeit des Eistütenhalters 16, den Geschwindigkeiten in den verschiedenen Bewegungsphasen der Düse 18. Selbstverständlich wird in der Praxis auch nicht eine Eistüte 14 allein mit einer einzigen Düse 18 befüllt, sondern ein Düsenkopf über ein Förderaggregat für einen breiten Strom von Eistüten 14 hinwegbewegt. Die Kinematik wird von großen bewegten Massen im System bestimmt. Doch setzt die energetische Bewegungsoptimierung gemäß der Erfindung bei den funktionellen Abhängigkeiten der räumlich-geometrischen Leit- und Folgekoordinaten x, y, z der hier vereinfacht modellierten Systemkomponenten ein:

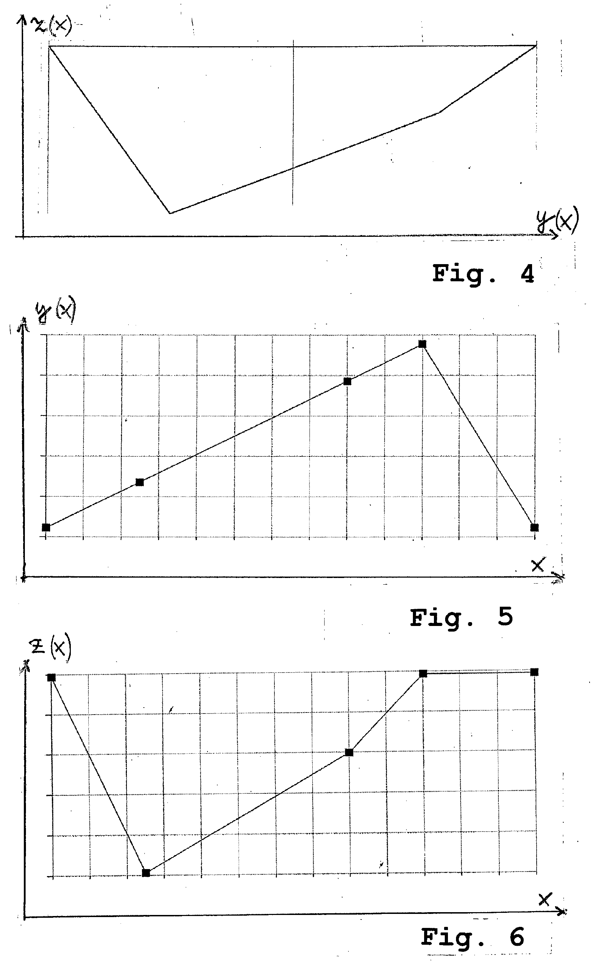

Fig. 4 zeigt eine räumliche (y(x), z(x)) Ausgangsbahn einer Düsenspitze, wie sie eingangs der erfindungsgemäßen Bewegungsoptimierung aufgefunden werden könnte. Verglichen mit der in Fig. 3 bereits gezeigten, praxisnäheren Bahn, ist die Ausgangsbahn gemäß Fig. 4 ersichtlich eckig und streckenweise steil.

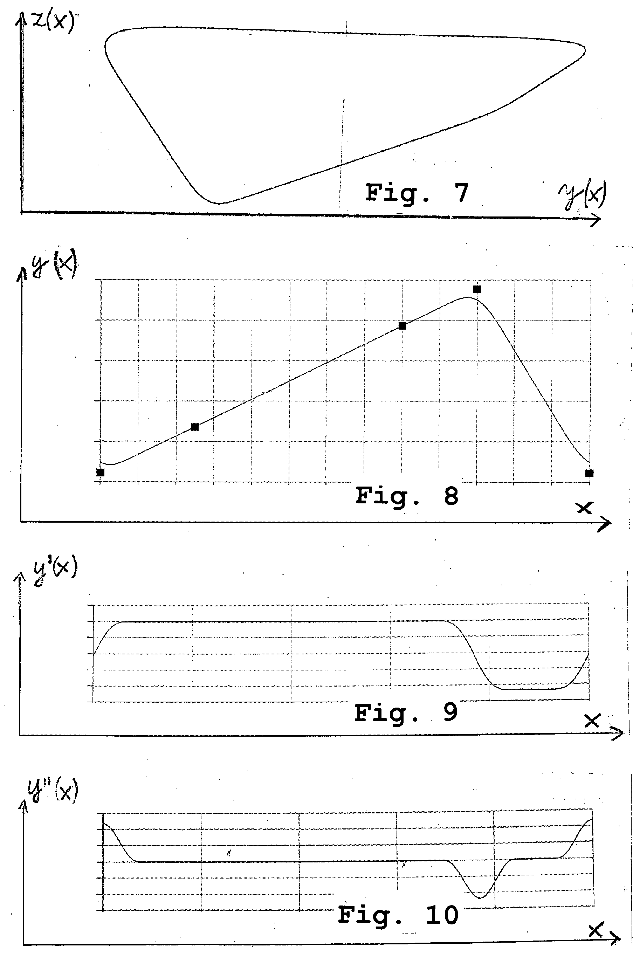

In Fig. 5 ist die zu der Ausgangsbahn (vgl. Fig. 4) gehörige Ausgangsfunktion y(x) der horizontalen translatorischen y-Bewegung der Düse 18 in Abhängigkeit von der Leitkoordinate x der translatorischen Bewegung des Eistütenhalters 16 dargestellt. Fig. 8 zeigt als Ergebnis einer erfindungsgemäßen Modifikation die Funktion y(x) an den Umkehrpunkten abgerundet und streckenweise abgeflacht.

Der ersten Ableitung y'(x) gemäß Fig. 9 entnimmt man, dass bei konstanter Geschwindigkeit v des Eistütenhalters 16 mit x(t) = v * t (Zeit t) die y-Geschwindigkeitskomponente der Düsenbewegung in weiten Bereichen ebenfalls konstant ist, da sich dy(x(t))/dt = y'(x(t)) * v ergibt. Die Minimierung der konstanten Anteile in der ersten Ableitung y'(x) gemäß Fig. 9 führt somit zu einer Minimierung der y-Geschwindigkeitskomponente der Düse 18 und damit zu einer energetischen Minimierung.

Der zweiten Ableitung y''(x) gemäß Fig. 10 entnimmt man, dass bei konstanter Geschwindigkeit v des Eistütenhalters 16 mit x(t) = v * t sich die y-Beschleunigungskomponente der Düsenbewegung zu d²y(x(t)) /dt² = y''(x(t)) * v² ergibt und dadurch an den Umkehrpunkten maximal wird.

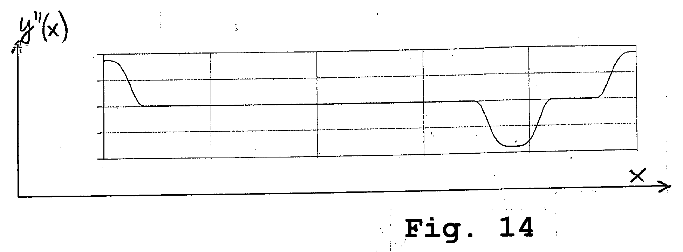

Ersetzt man an den Umkehrpunkten einen Übergangsabschnitt in Form eines Ausgangspolynoms durch ein höhergradiges Polynom, das an einem Hoch-/Tiefpunkt der zweiten Ableitung des Ausgangspolynoms in der dritten und vierten Ableitung eine Nullstelle hat, können dadurch die Beschleunigungsspitzen verringert werden, was eine weichere Bewegung nach sich zieht. Diese Modifikation ist durch die Darstellung der zweiten Ableitung y''(x) in Fig. 14 illustriert.

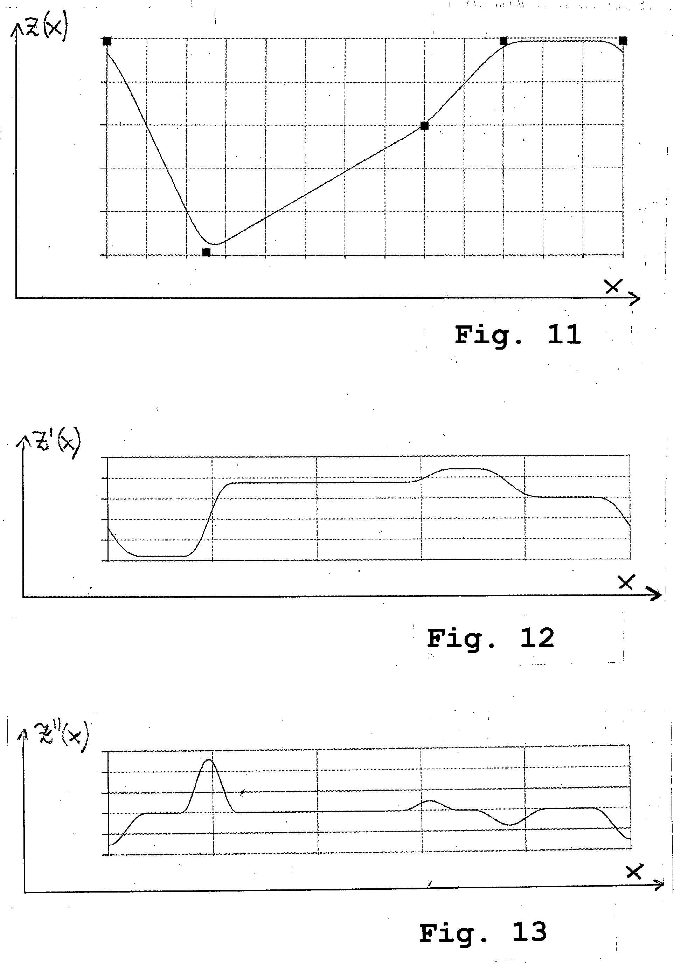

In Fig. 6 ist die zu der Ausgangsbahn (vgl. Fig. 4) gehörige Ausgangsfunktion z(x) der vertikalen translatorischen z-Bewegung der Düse 18 in Abhängigkeit von der Leitkoordinate x der translatorischen Bewegung des Eistütenhalters 16 dargestellt. Fig. 11 zeigt als Ergebnis einer erfindungsgemäßen Modifikation die Funktion z(x) an den Umkehrpunkten abgerundet und streckenweise abgeflacht.

Der ersten Ableitung z'(x) gemäß Fig. 12 entnimmt man, dass bei konstanter Geschwindigkeit v des Eistütenhalters 16 mit x(t) = v * t auch die z-Geschwindigkeitskomponente der Düsenbewegung in weiten Bereichen konstant ist.

Der zweiten Ableitung z''(x) gemäß Fig. 13 entnimmt man, dass bei konstanter Geschwindigkeit v des Eistütenhalters 16 mit x(t) = v * t sich die z-Beschleunigungskomponente der Düsenbewegung zu d²z(x(t))/dt² = z''(x(t)) * v² ergibt und dadurch an den Umkehrpunkten maximal wird.

Die erfindungsgemäße Modifikation resultiert in der (y(x), z(x)) Folgebahn der Düsenspitze gemäß Fig. 7.

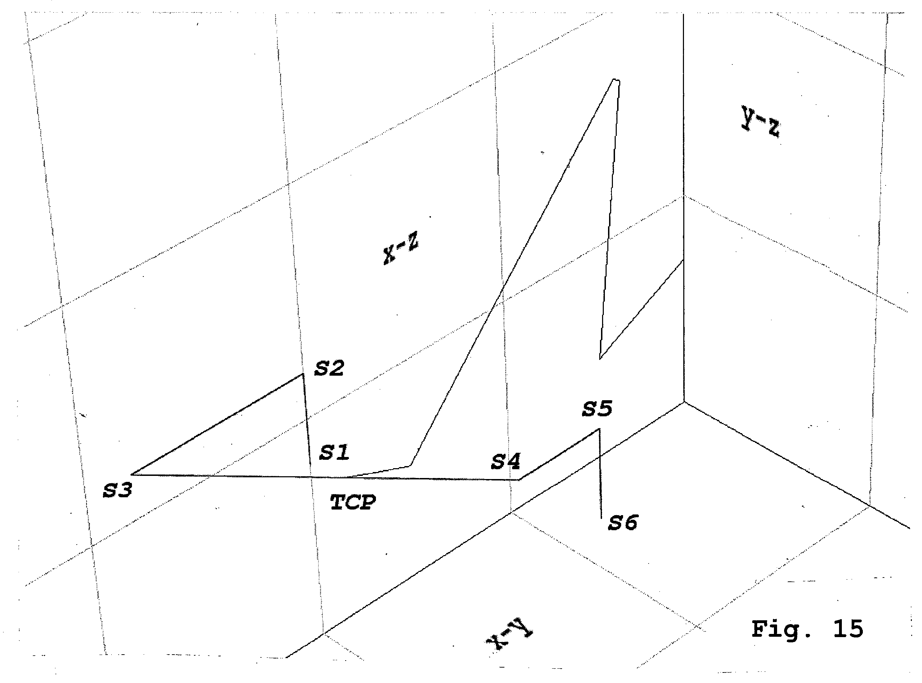

Als Beispiel für die Anwendung der Erfindung in der Robotik betrachte man anhand von Fig. 15 bis Fig. 20 einen Roboterarm, dessen Werkzeugmittelpunkt (Tool Center Point; TCP; siehe Fig. 15) eine Bahn im dreidimensionalen Raum beschreibt. Der Bahnparameter für die Steuerung der Roboterarmbewegung leitet sich von der Bahnlänge dieser Bahn ab. Die Bahnlänge kann in erster Näherung als Gesamtlänge der Verbindungsstrecken von einem ersten dreidimensionalen Bahnstützpunkt S1 bis zu einem letzten dreidimensionalen Bahnstützpunkt S6 in Fig. 15 angenommen werden - Punkt-zu-Punkt-Bewegungen eingeschlossen.

Somit kann der Bahnparameter x in einem Definitionsbereich zwischen Null und Bahngesamtlänge als Ortsleitkoordinate für das erfindungsgemäße Verfahren dienen. Aus der Bahngesamtlänge und der Bahn- oder Punkt-zu-Punkt-Verfahrzeit kann eine (konstante) Bahnparameterverfahrgeschwindigkeit v mit x(t) = v * t angenommen werden. Somit können aus den Bahnstützpunkten (S1 - S6) durch Rücktransformation eindeutige Folgeachskoordinatenstützpunkte gewonnen werden. Aus der konstanten Bahnparameterverfahrgeschwindigkeit v ergeben sich eindeutig die Stützpunkte des zugehörigen Bahnparameters als Leitkoordinatenstützpunkte. Im Zuge des erfindungsgemäßen Verfahrens kann die ganze Werkzeugmittelpunktsbahn entsprechend transformiert werden, unter Verwendung desselben Bahnparameters als Ortsleitkoordinate.

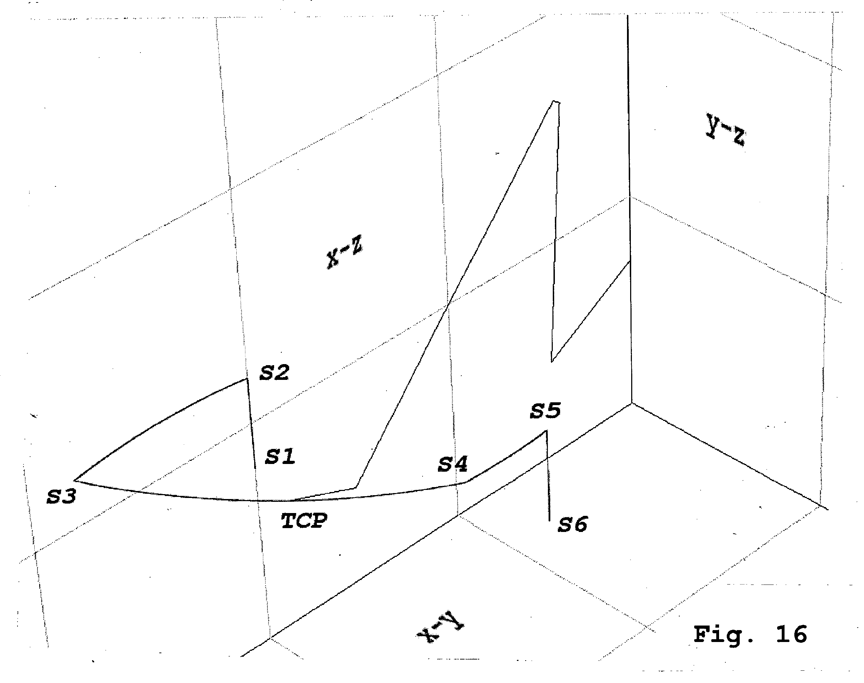

Fig. 16 zeigt die Bahn des Werkzeugmittelpunkts (TCP) nach erfindungsgemäßer Modifikation der Roboterarmbewegung aus Fig. 15. Die Bahnabschnitte S1 - S2 und S5 - S6 bleiben arbeitsprozessbedingt Geraden. Die Kurven S2 - S3, S3 - S4 und S4 - S5 ergeben sich dadurch, dass sich alle Roboterachsen geradlinig nach dem erfindungsgemäßen Verfahren in ihren jeweiligen Winkelfolgekoordinaten bewegen.

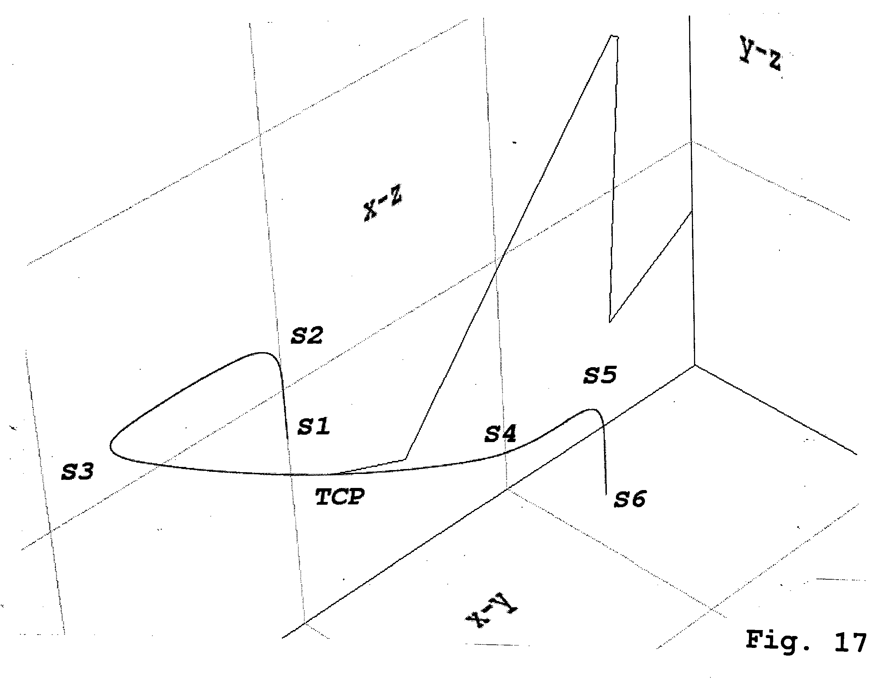

Fig. 17 veranschaulicht die erfindungsgemäße Modifikation mit für alle Roboterfolgeachsen eingefügten Übergangsabschnitten bei den Bahnstützpunkten S2 bis S4.

Es kann sogar eine fest vorgegebene Werkzeugmittelpunktsbahn stetig und mehrfach glatt, durch Gleichsetzen der ersten und/oder höheren Ableitungen der Achskoordinaten bezüglich der Bahnlänge der fest vorgegebenen Werkzeugmittelpunktsbahn und Verwenden dieser Ableitungen für den ersten polynomalen Übergangsabschnitt des erfindungsgemäßen Verfahrens, in die Bewegungsart des erfindungsgemäßen Verfahrens, übergehen. Dies wird durch den Übergangsabschnitt bei S2 in Fig. 17 verdeutlicht. Dieser Übergang kann analog auch aus der Bewegungsart des erfindungsgemäßen Verfahrens in eine fest vorgegebene Werkzeugmittelpunktsbahn gemacht werden, wie der Übergangsabschnitt bei S5 in Fig. 17 zeigt.

Man kann nun die Stützpunkte der virtuellen Leitachse beziehungsweise des Bahnparameters und die Stützpunkte der Werkzeugmittelpunktsbahn variieren, und in Konsequenz die nach Rücktransformation sich ergebenden Roboterfolgeachskoordinaten. Somit kann man zusätzlich einen quasi synchronen Gleichlauf der Roboterachsen speziell auf den im wesentlichen linearen Funktionsabschnitten erhalten.

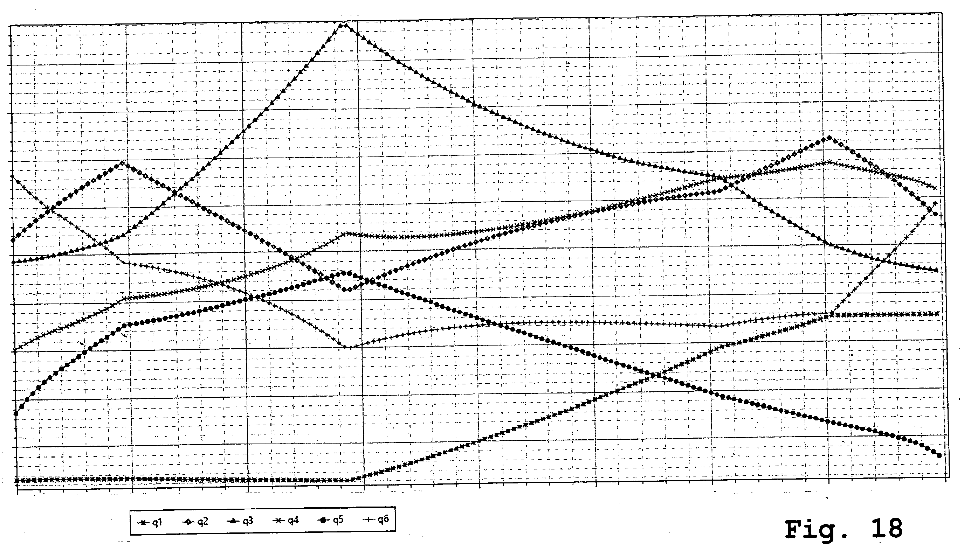

In Fig. 18 sind die sechs Roboterachswinkel (q1, q2, q3, q4, q5, q6) der linearen räumlichen Bahn aus Fig. 15 dargestellt. Man erkennt, dass räumlich lineare Bahnstrecken zu in der Regel gekrümmten Achswinkelverläufen führen, da sich die Achswinkel (q1, q2, q3, q4, q5, q6) aus der Rücktransformation der Bahnkoordinaten ergeben.

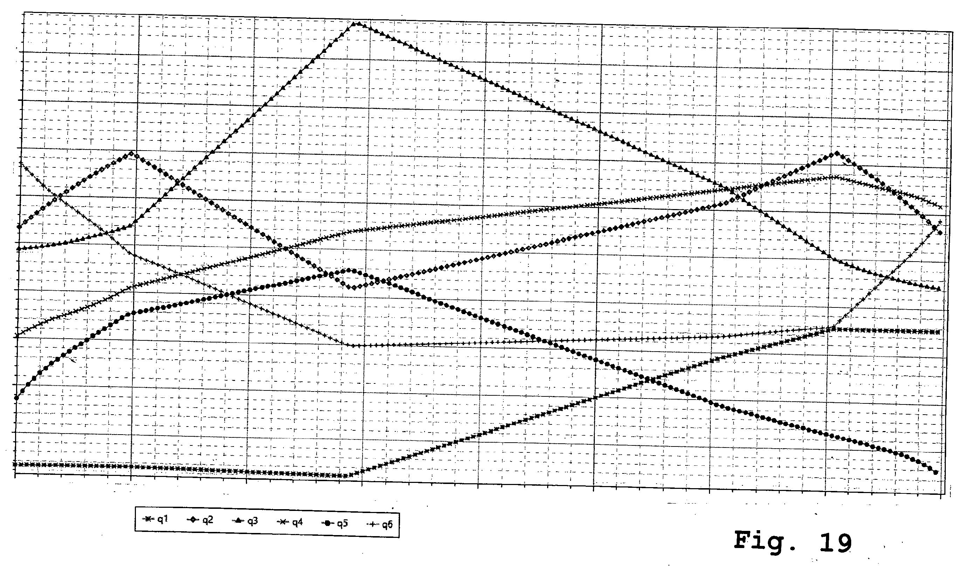

Fig. 19 stellt die Achswinkel (q1, q2, q3, q4, q5, q6) dar, die sich nach dem erfindungsgemäßen Verfahren als Geraden je Achse zwischen den Stützpunkten ergeben, wobei das erste und letzte Teilstück aus der arbeitsprozessbedingt linearen räumlichen Bahn stammen und nicht verändert sind. Fig. 19 bezieht sich dabei eins zu eins auf die Bewegung, welche in Fig. 16 veranschaulicht ist.

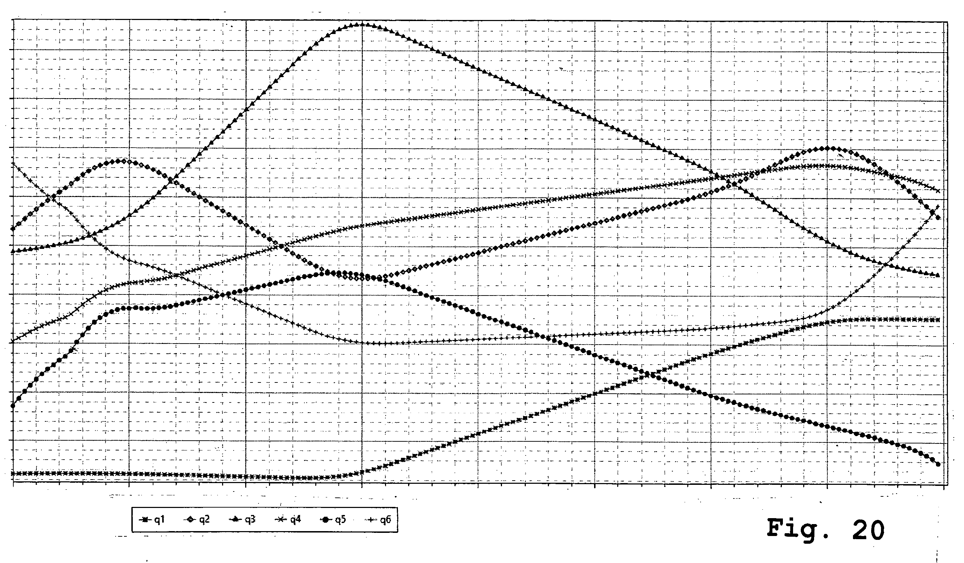

In Fig. 20 werden an den Stützpunkten nach dem erfindungsgemäßen Verfahren Übergangsabschnitte eingefügt, so dass sich ein weicher Bewegungsablauf ergibt. Fig. 20 bezieht sich eins zu eins auf die Bewegung, welche in Fig. 17 veranschaulicht ist. Auch aus den arbeitsprozessbedingt linearen räumlichen Bahnen des ersten und letzten Teilstücks werden nach dem erfindungsgemäßen Verfahren Übergangsabschnitte berechnet, welche in diesem Fall jeweils bis zu den ersten Ableitungen glatt sind.

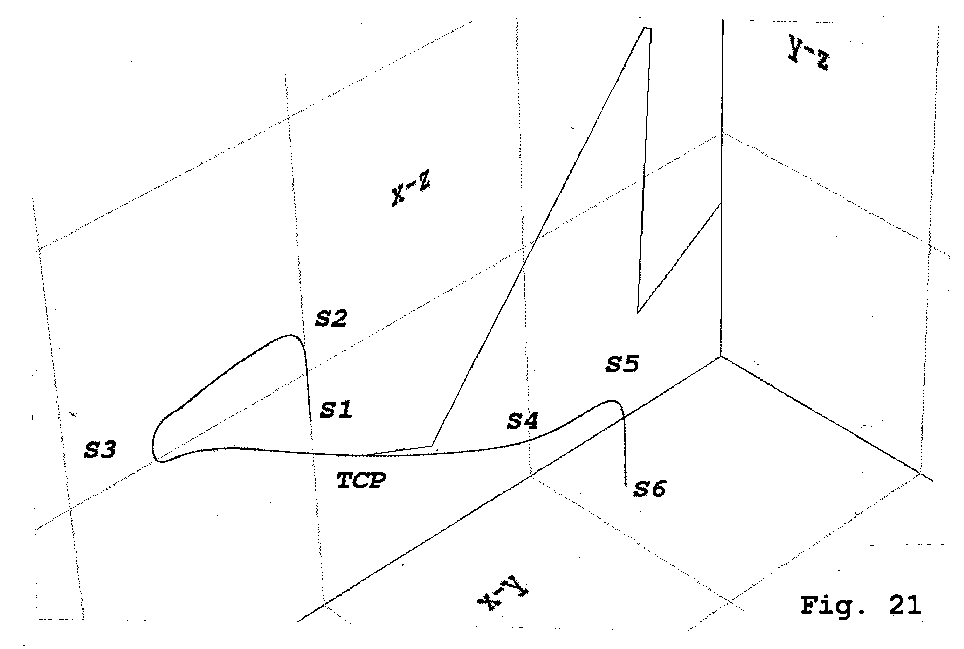

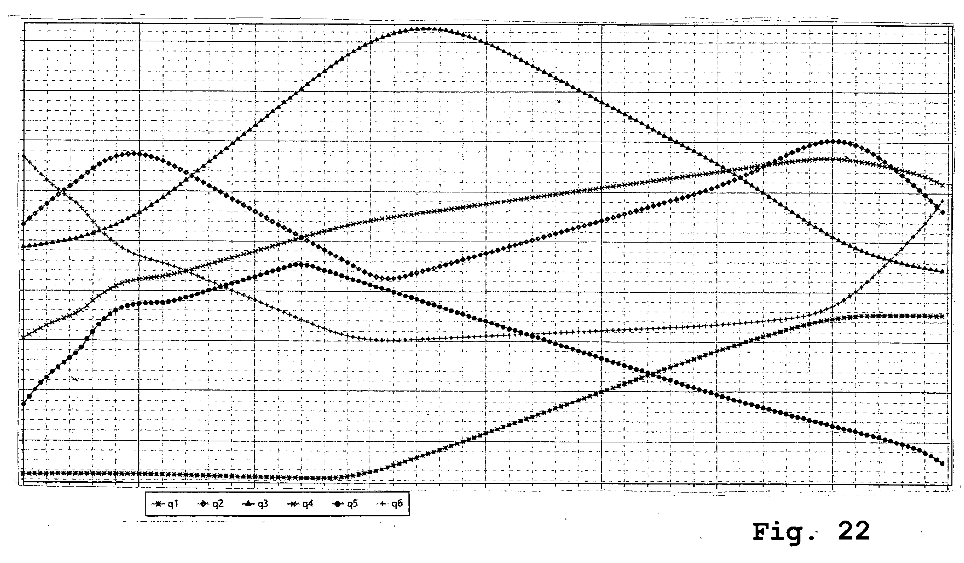

Fig. 21 und Fig. 22 veranschaulichen das Verhalten, wenn für drei Roboterarmachsen (q2, q3, q5) in der Umgebung von S3 modifizierte Leitachs-/Bahnparameterstützpunkte und modifizierte Übergangsabschnittslängen verwendet werden.

### Liste der Bezugszeichen

- 10: Kurvenscheibe
- 12: Gelenkarm
- 14: Eistüte
- 16: Eistütenhalter
- 18: Düse
- 20: Speiseeismasse

- q1: Roboterarm-Achswinkel
- q2: Roboterarm-Achswinkel
- q3: Roboterarm-Achswinkel
- q4: Roboterarm-Achswinkel
- q5: Roboterarm-Achswinkel
- q6: Roboterarm-Achswinkel

- S1: Bahnstützpunkt
- S2: Bahnstützpunkt
- S3: Bahnstützpunkt
- S4: Bahnstützpunkt
- S5: Bahnstützpunkt
- S6: Bahnstützpunkt

- TCP: Werkzeugmittelpunkt

## Patentansprüche

1. Verfahren zur Steuerung des Bewegungsablaufs einer motorisch angetriebenen Maschinen- oder Werkzeugkomponente mit der Maßgabe, dass der Bewegungsablauf durch die funktionelle Abhängigkeit wenigstens einer räumlich-geometrischen Orts- oder Winkelfolgekoordinate von einer räumlich-geometrischen Orts- oder Winkelleitkoordinate bestimmt und eine Ausgangsfunktion festgelegt wird, dass Stützpunkte auf oder nahe der Ausgangsfunktion definiert werden, dass benachbarte Stützpunkte durch im wesentlichen lineare Funktionsabschnitte miteinander verbunden werden, dass an den Stützpunkten ein stetiger, glatter Übergang zwischen den im wesentlichen linearen Funktionsabschnitten hergestellt wird, dass aus den im wesentlichen linearen Funktionsabschnitten und den Übergangsabschnitten an den Stützpunkten eine Folgefunktion zusammengesetzt wird, dass der Energiebedarf für den Bewegungsablauf nach der Ausgangsfunktion und nach der Folgefunktion ermittelt und verglichen und dass gebotenenfalls die zuletzt erhaltene (Folge-, Folge-Folge-, ...) Funktion zur Minderung des Energiebedarfs wie vor modifiziert wird.

2. Verfahren nach Anspruch 1, **dadurch gekennzeichnet, dass** mindestens ein im wesentlichen linearer Funktionsabschnitt auf eine möglichst große Länge und/oder eine möglichst geringe Steigung hin modifiziert wird.

3. Verfahren nach Anspruch 1 oder 2, **dadurch gekennzeichnet, dass** mindestens ein im wesentlichen linearer Funktionsabschnitt von einer Geraden oder von einem Polynom gebildet wird, bei welchem die zweite und die dritte Ableitung und vorzugsweise überdies wenigstens eine höhere Ableitung eine gemeinsame Nullstelle im Definitionsbereich des im wesentlichen linearen Funktionsabschnitts haben.

4. Verfahren nach einem der Ansprüche 1 bis 3, **dadurch gekennzeichnet, dass** mindestens ein Übergangsabschnitt von einem Polynom gebildet wird, das bis zur ersten Ableitung stetig und vorzugsweise auch in einer oder mehreren höheren Ableitung(en) glatt in die zu verbindenden, im wesentlichen linearen Funktionsabschnitte übergeht.

5. Verfahren nach Anspruch 4, **dadurch gekennzeichnet, dass** ein Ausgangspolynom nach Anspruch 4 modifiziert wird, indem es durch ein höhergradiges Polynom nach Anspruch 4 ersetzt wird, das an einem Hoch-/Tiefpunkt der zweiten Ableitung des Ausgangspolynoms in der dritten und vierten Ableitung eine Nullstelle hat.

6. Verfahren nach einem der Ansprüche 1 bis 5, **dadurch gekennzeichnet, dass** ein Bahnparameter, vorzugsweise die Bahnlänge, der Bewegungsbahn eines Werkzeugmittelpunkts (Tool Center Point; TCP) als Leitkoordinate verwendet wird.

7. Verfahren nach Anspruch 6, **dadurch gekennzeichnet, dass** wenigstens ein Stützpunkt durch die Transformation der Koordinaten eines Bahnstützpunkts (S1 - S6) auf der Bewegungsbahn des Werkzeugmittelpunkts (TCP) definiert wird.

8. Verfahren nach einem der Ansprüche 1 bis 7, **dadurch gekennzeichnet, dass** wenigstens eine Raum- oder Orientierungskoordinate der Bewegungsbahn eines Werkzeugmittelpunkts (TCP) als Orts- oder Winkelfolgekoordinate verwendet wird.

9. Verfahren nach einem der Ansprüche 1 bis 8, **dadurch gekennzeichnet, dass** im wesentlichen lineare Funktionsabschnitte wenigstens zweier räumlich-geometrischer Orts- oder Winkelfolgekoordinaten in Abhängigkeit von derselben räumlich-geometrischen Winkelleitkoordinate auf Gleichlauf hin modifiziert werden.
